# FASCICULE DE BREVET EUROPEEN

(11) **EP 1 073 998 B1**
(45) Date de publication et mention de la délivrance du brevet: **28.11.2007**
(21) Numéro de dépôt: 99914591.5
(22) Date de dépôt: 15.04.1999
(51) Int. Cl.: G06K 19/077

(54) **PROCEDE DE FABRICATION D'UNE CARTE A CIRCUIT INTEGRE A CONTACT ET UNE CARTE OBTENUE SELON CE PROCEDE**
VERFAHREN ZUR HERSTELLUNG EINER MIT KONTAKTEN VERSEHENEN IC-KARTE UND NACH DIESEM VERFAHREN HERGESTELLTE IC-KARTE
METHOD FOR MAKING A CONTACT INTEGRATED CIRCUIT CARD AND RESULTING CARD

(30) Priorité: 22.04.1998 FR 9805625
(43) Date de publication de la demande: 07.02.2001
(60) Demande divisionnaire: 07112462.2
(73) Titulaire: GEMPLUS, 13881 Gémenos Cédex (FR)
(72) Inventeur: ELBAZ, Didier, F-13010 Marseille (FR)
(86) Numéro de dépôt international: PCT/FR1999/000890
(87) Numéro de publication internationale: WO 1999/054846

(56) Documents cités:
- EP-A- 0 521 778
- EP-A- 0 638 873
- EP-A- 0 897 785

## Description

L'invention concerne un procédé de fabrication d'une carte à circuit intégré à contact.

L'invention se rapporte plus particulièrement à un procédé de fabrication d'une carte à circuit intégré à contact, du type dans lequel la carte comporte un support, qui est réalisé par moulage en matière plastique, qui est en forme de plaque selon premier format, et qui porte au moins un microcircuit électronique et une série de plages de contact pour le raccordement électrique du microcircuit à un circuit d'exploitation, et du type dans lequel la carte comporte une fente de contour qui est formée dans le support, autour d'une portion interne comportant le microcircuit et la série de plages de contact, pour délimiter, à l'intérieur d'une portion externe selon le premier format, une minicarte selon un second format, la minicarte étant reliée au support de la carte par des bretelles, réalisées venues de matière avec le support, et pouvant être détachée de la portion externe du support.

Un exemple de réalisation d'une telle carte est par exemple décrit dans le document EP-A-0.521.778.

Selon un procédé connu de fabrication d'une telle carte, le support de la carte à circuit intégré est réalisé par moulage en matière plastique ou par lamination, puis le circuit intégré est incorporé dans le support la carte au cours d'une opération dite d'encartage.

Ce n'est qu'à la fin de la fabrication de la carte que la prédécoupe est réalisée, par exemple par poinçonnage ou à l'aide d'un outil de découpe tel qu'un faisceau laser ou un jet d'eau à haute pression. Cette manière de procéder nécessite une opération supplémentaire qui est lourde à mettre en oeuvre et peu productive.

Cette opération supplémentaire nécessite un positionnement précis de la carte par rapport à l'outil qui effectue la découpe, notamment du fait qu'il est nécessaire de respecter une position précise des plages de contact du microcircuit par rapport aux bords de la minicarte, ceci afin de respecter la norme.

Par ailleurs, cette opération présente l'inconvénient qu'il peut subsister des traces de cette opération de découpe, par exemple des bavures.

Le document EP-A-0 897 785 relève de l'article 54(3) CBE. Il décrit une carte avec un microcircuit encarté formée dans un moule en injectant un premier matériau dans un premier espace de moulage et en formant un second espace de moulage par retrait d'un coulisseau. Un second matériau est alors injecté dans le second espace de moulage.

L'invention a donc pour but de proposer un nouveau procédé de fabrication d'une carte à circuit intégré permettant de réaliser de manière simple et économique une carte bi-standards dans laquelle la minicarte peut être facilement détachée de la portion externe de la carte.

Dans ce but, l'invention propose un procédé conforme à la revendication 1.

Selon d'autres caractéristiques de l'invention:
- la prédécoupe est réalisée sous la forme d'une rainure qui entoure la portion interne du support et au niveau de laquelle le support présente une épaisseur réduite ;
- la prédécoupe est réalisée sous la forme d'un fente discontinue qui entoure la portion interne du support et qui est interrompue par des bretelles réalisées venues de matière avec le support ;
- les bretelles comportent chacune au moins une amorce de rupture qui est formée directement lors du moulage du support ;
- la minicarte comporte, sur au moins un de ses bords délimités par la fente, un chanfrein qui est formé directement lors du moulage du support ;
- le support est moulé par injection de matière plastique ;
- l'une au moins des bretelles présente une largeur importante, et l'injection est réalisée à proximité de ladite bretelle ;
- l'injection est réalisée sur un bord du support de la carte, la direction principale d'injection étant sensiblement contenue dans le plan du support et dirigée vers ladite bretelle de largeur importante ; et
- le microcircuit électronique fait partie d'un module qui est rapporté dans une cavité aménagée dans le support de carte, et la cavité est formée directement lors du moulage du support, ou plus tard lors d'une opération d'usinage.

D'autres caractéristiques et avantages de l'invention apparaîtront à la lecture de la description détaillée qui suit en référence aux dessins annexés dans lesquels:

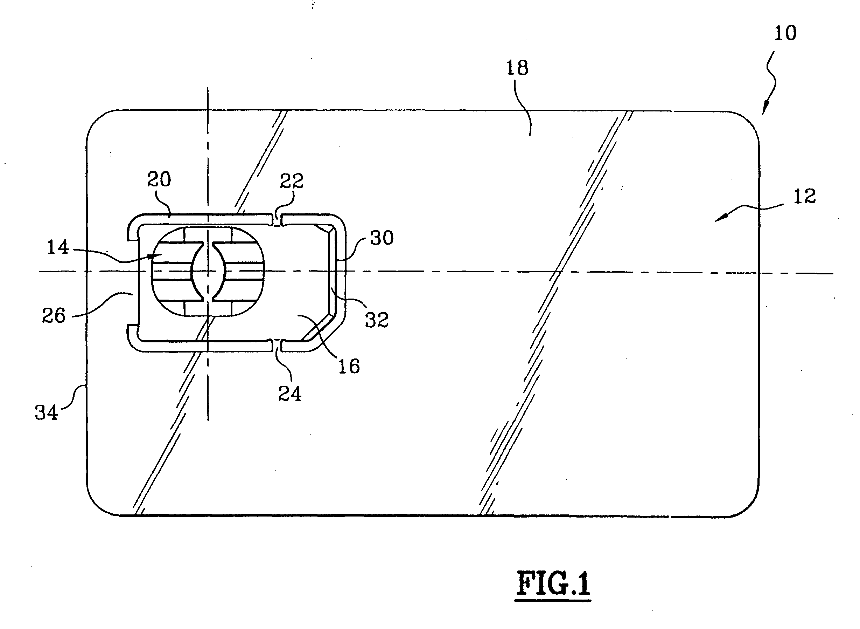

- la figure 1 est une vue en plan d'une carte selon l'invention ;
- la figure 2 est une vue agrandie d'un détail de la figure 1 illustrant plus particulièrement la fente qui délimite la minicarte ; et
- les figures 3 et 4 sont des vues en coupe selon les lignes 3-3 et 4-4 de la figure 2.

On a représenté sur les figures une carte 10 à circuit intégré, couramment appelée carte à puce, dans laquelle un support 12, généralement réalisé en matière plastique, porte un circuit intégré ou microcircuit électronique qui est généralement intégré dans l'épaisseur du support 12 de la carte 10. Le support 12 présente une forme de plaque rectangulaire à coins arrondis dont les dimensions et l'épaisseur sont définis par une norme, par exemples les normes internationales ISO7816-1 et 7816-2 qui sont les normes les plus répandues pour les cartes de crédit ou les cartes téléphoniques habituelles.

Le circuit intégré 10 comporte des plages de contact 14 qui sont destinées à affleurer à la surface du support 12 et qui permettent d'établir des connexions électriques entre le microcircuit et un circuit d'exploitation des informations portées ou transmises par la carte 10.

À titre d'exemple, le circuit d'exploitation est généralement intégré dans un appareil qui est pourvu d'un connecteur dans lequel l'utilisateur introduit la carte 10. Le connecteur est pourvu d'une série de lames de contact destinée à venir en appui sur les plages de contact 14 de la carte 10 lorsque celle-ci est en position dans le connecteur.

Bien entendu, pour que le contact entre les lames du connecteur et les plages de contact 14 soit réalisé à coup sûr, la norme définit une position bien déterminée du microcircuit et des plages de contact 14 par rapport aux bords du support 12.

Toutefois, il est apparu des applications dans lesquelles la carte à avantage à être de dimensions beaucoup plus réduite. Ainsi, notamment pour certains combinés téléphoniques portables, de type " GSM ", il est préférable d'utiliser des cartes selon une seconde norme dans lesquelles les dimensions du support 12 sont beaucoup plus réduites, Cependant, à l'exception de la taille du support les deux standards de carte ainsi définis mettent en oeuvre les mêmes microcircuits électroniques, dans les mêmes applications.

Il est donc apparu le besoin de proposer des cartes à circuit intégré qui puissent être utilisées selon les deux formats, c'est-à-dire soit sous la forme d'une carte au format carte de crédit classique soit sous la forme d'une minicarte de dimensions réduites.

Dans ce but, il a donc déjà été proposé des procédés de fabrication de cartes dans lesquels on délimite dans le support 12 une portion interne 16 d'une portion externe 18, les deux portions étant délimitées par une prédécoupe qui est prévue de manière que, lorsque l'on veut détacher !a minicarte, la séparation des portions interne 16 et externe 18 du support 12 se fait le long de la prédécoupe.

Les figures illustrent un mode préféré de réalisation de l'invention dans lequel la prédécoupe est réalisée sous la forme d'une fente 20 discontinue. La fente 20, qui s'étend autour du circuit intégré, présente un profil sensiblement rectangulaire défini en fonction de la norme G.S.M 11.11. Elle est interrompue de manière à laisser subsister des bretelles 22, 24, 26 qui permettent à la portion interne 16 du support 12, qui porte le circuit intégré, de rester solidaire de la portion externe 18.

La carte 10 peut alors être utilisée telle qu'elle, au format classique des cartes de crédit, mais il est aussi possible de l'utiliser au format "minicarte" en détachant la portion interne 16 qui porte la puce de la portion externe 18. La minicarte est détachée soit en découpant les bretelles 22, 24, 26 à l'aide d'un outil, soit en provoquant la rupture de ses bretelles par pression sur la portion interne 16, à l'aide d'un outil ou, plus simplement, avec le doigt.

Conformément aux enseignements de l'invention, le support 12 est réalisée par moulage en matière plastique et la fente 20 est réalisée directement lors de l'opération de moulage du support 12 de grâce à une forme complémentaire du moule.

Ainsi, à partir du support 12 ainsi réalisé, on peut obtenir une carte bi-standards en appliquant au support 12 le même procédé que pour la fabrication d'une carte mono-standard, sans qu'il y ait besoin de recourir à une étape de fabrication supplémentaire.

La réalisation de la fente 20 directement au cours du moulage du support 12 permet par ailleurs de simplifier considérablement d'autres opérations qui peuvent intervenir au cours du procédé de fabrication de la carte, en fonction de la destination de celle-ci.

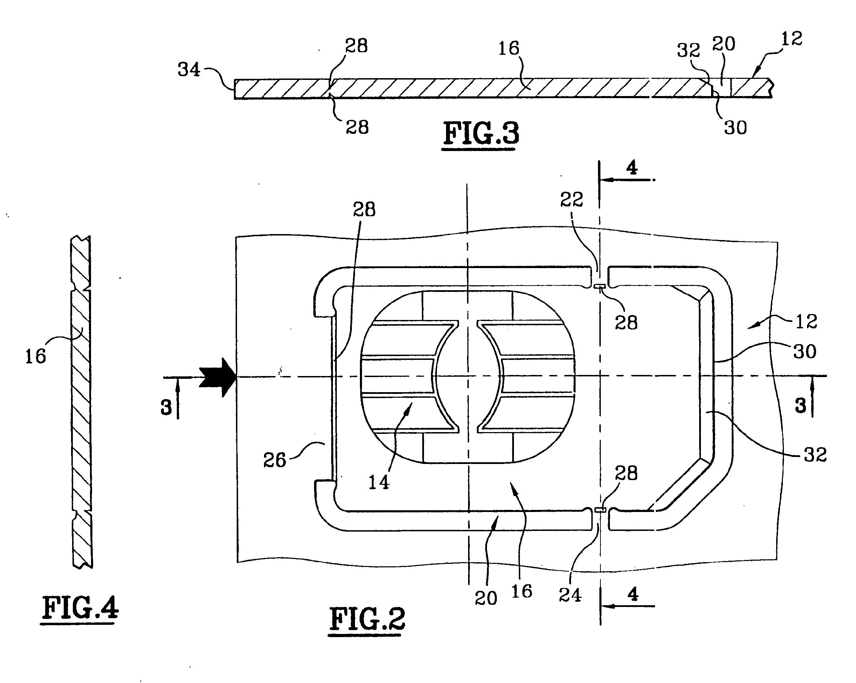

Comme on peut le voir plus particulièrement sur les figures 2 à 4, les bretelles de liaison 22, 24, 26, qui relient la portion interne 16 à la portion externe 18 du support 12, peuvent être munies d'amorces de rupture destinée à faciliter le détachage de la portion interne 16 qui est destinée à former la minicarte par rapport à la portion externe 18, notamment lorsque ce détachage doit se faire par simple pression.

Les amorces de rupture sont généralement réalisées sous la forme d'au moins une empreinte 28 en creux aménagée dans l'une des faces du support 12 en forme de plaque, au travers de la bretelle considérée. Ces empreintes sont destinées à diminuer localement l'épaisseur de la bretelle pour la fragiliser à un endroit particulier où l'on souhaite que se réalise la rupture lorsque la minicarte est détachée de la portion externe 18 du support 12. Éventuellement, une même bretelle peut comporter des empreintes en creux aménagées en regard l'une de l'autre dans chacune des deux faces du support 12 pour augmenter encore la fragilité de l'amorce de rupture. Les empreintes 28 présentent généralement la forme d'une entaille allongée perpendiculaire à la bretelle et, comme on peut le voir sur les figures 3 et 4, elles peuvent présenter, en section transversale, divers types de profils.

Dans le cadre de l'invention, il peut donc être intéressant de réaliser tout ou partie de la prédécoupe, fentes, empreintes, creux en une seule opération de moulage. En particulier, ces empreintes 28 sont réalisées simultanément au moulage du support, en même temps que la fente 20. On obtient ainsi une garantie quant à la précision du positionnement de l'amorce de rupture 28 par rapport aux bretelles et par rapport aux bords de la minicarte.

L'invention est particulièrement avantageuse dans la mesure où il est possible d'obtenir directement une section au niveau des bretelles qui soit d'épaisseur inférieure à celle du corps de carte.

En variante, on peut également obtenir directement par injection une diminution d'épaisseur de la carte tout autour de la mini-carte avec ou sans bretelles.

De préférence, la variation d'épaisseur s'effectue d'un seul côté notamment le même côté que celui ou débouche la cavité, laissant l'autre côté inaltéré. L'avantage est d'offrir la possibilité d'une impression complète également inaltérée sur le verso de la carte.

De même, on peut voir que la minicarte comporte un bord, délimité par la fente 20, qui présente un chanfrein 32, par exemple en vue de faciliter l'introduction ou le retrait de la minicarte dans un connecteur correspondant. Dans le cadre de la fabrication d'une carte 10 selon l'invention, le chanfrein 32 peut lui aussi être réalisé directement lors de l'opération de moulage du support 12, en même temps que la réalisation de fente 20.

Une technique de moulage particulièrement adaptée à la fabrication du support de carte est l'injection de matière plastique, notamment en ABS.

Les points d'injection peuvent être situés à différents endroits notamment sur un champ latéral de la portion externe ou au niveau de la minicarte, par exemple dans la cavité.

De préférence, on adopte un point d'injection sur la minicarte et sur un champ latéral de la portion externe. Leur position exacte peut être optimisée par une méthode informatique de stimulation d'injection appelée « Mold Flow ».

Dans l'exemple de réalisation illustré sur les figures, l'une 26 des bretelles de liaison présente une largeur importante, très supérieure à celle des autres bretelles 22, 24. En l'espèce, cette bretelle 26 est par ailleurs agencée à proximité d'un bord externe 34 du support 12.

Aussi, pour réaliser l'injection de matière dans le moule, il est particulièrement intéressant de prévoir que celle-ci se fasse au niveau dudit bord externe 34, dans le plan de la plaque formée par le support 12, en direction de la bretelle 26 de largeur importante. Le flux de matière dans le moule se trouve ainsi facilité grâce à la forte section de passage au niveau de la bretelle 26 de largeur importante qui permet un remplissage optimal de la partie du moule qui est destinée à former la portion interne 16 du support de carte 12.

Par ailleurs, lorsque le support de carte 12 est réalisé par moulage, il est généralement prévu que le microcircuit électronique et les plages de contact 14 soient préassemblés sous la forme d'un micromodule qui est ensuite destiné à être reçu dans une cavité formée dans le support 12, en l'occurrence dans la portion interne 16 de celui-ci qui est destinée à former la minicarte.

Dans ce cadre, on pourra avantageusement prévoir que la cavité soit réalisée directement lors de l'opération de moulage du support 12, en même temps que la fente 20. Toutefois, cette cavité peut aussi être réalisée ultérieurement par usinage du support.

A titre de variante (non représentée), on peut prévoir que la prédécoupe soit réalisée sous la forme d'une rainure qui entoure la portion interne du support et au niveau de laquelle le support présente une épaisseur réduite. Cette rainure forme donc une zone de fragilité qui est par exemple susceptible de rompre si l'on appuie sur la portion interne du support, avec un outil ou avec le doigt.

## Revendications

1. Procédé de fabrication d'une carte à circuit intégré à contact, du type dans lequel la carte comporte un support (12), qui est réalisé par moulage en matière plastique, qui est en forme de plaque selon un premier format, et qui porte au moins un microcircuit électronique et une série de plages de contact (14) pour le raccordement électrique du microcircuit à un circuit d'exploitation, et du type dans lequel la carte comporte une prédécoupe de contour (20) qui est formée dans le support (12), autour d'une portion interne (16) comportant le microcircuit et la série de plages de contact (14), pour délimiter, à l'intérieur d'une portion externe (18) selon le premier format, une minicarte selon un second format, la minicarte étant reliée à la portion externe (18) du support (12) de manière à pouvoir en être séparée facilement le long de la prédécoupe,
**caractérisée en ce que** la prédécoupe (20) est formée directement lors du moulage du support (12) et de la portion interne (16) dans un même espace de moulage.

2. Procédé selon la revendication 1, **caractérisé en ce que** la prédécoupe est réalisée sous la forme d'une rainure qui entoure la portion interné du support et au niveau de laquelle le support présente une épaisseur réduite.

3. Procédé selon la revendication 1, **caractérisé en ce que** la prédécoupe est réalisée sous la forme d'une fente discontinue (20) qui entoure la portion interne (16) du support (18) et qui est interrompue par des bretelles (22, 24, 26) réalisées venues de matière avec le support (12).

4. Procédé selon la revendication 3, **caractérisé en ce que** les bretelles (22, 24, 26) comportent chacune au moins une amorce de rupture (28) qui est formée directement lors du moulage du support (12).

5. Procédé selon l'un des revendications 3 ou 4, **caractérisé en ce que** la minicarte comporte, sur au moins un (30) de ses bords délimités par la fente, un chanfrein (32) qui est formé directement lors du moulage du support (12).

6. Procédé selon l'une quelconque des revendications précédentes, **caractérisé en ce que** le support est moulé par injection de matière plastique.

7. Procédé selon la revendication 6 prise en combinaison avec l'une quelconque des revendications 3 à 5. **caractérisé en ce que** l'une (26) au moins des bretelles présente une largeur importante, et **en ce que** l'injection est réalisée à proximité de ladite bretelle (26).

8. Procédé selon la revendication 7, **caractérisé en ce que** l'injection est réalisée sur un bord (34) du support (12) de la carte, la direction principale d'injection étant sensiblement contenue dans le plan du support (12) et dirigée vers ladite bretelle (26) de largeur importante.

9. Procédé selon l'une quelconque des revendications précédentes, **caractérisé en ce que** le microcircuit électronique fait partie d'un module qui est rapporté dans une cavité aménagée dans le support de carte (12), et **en ce que** la cavité est formée directement lors du moulage du support (12).

## Claims

1. A method for manufacturing a contact integrated circuit card, of the type in which the card includes a support (12), which is moulded in plastic material, which is in the form of a plate according to a first size and which carries at least one electronic microcircuit and a series of contact pads (14) for the electric connection of the microcircuit to an operation circuit, and of the type in which the card includes an outline slot (20) which is formed in the support (12), around an inner portion (16) including the microcircuit and the series of contact pads (14), in order to define, within an outer portion (18) according to the first size, a mini card according to the second size, the mini card being connected to the outer portion (18) of the support (12) so as to be able to be easily separated along the score,
**characterized in that** the score (20) is directly formed when the support and the inner portion (16) are moulded in the same moulding space.

2. A method according to claim 1, **characterized in that** the score is made in the form of a slot which surrounds the inner portion of the support and at the level of which the support has a reduced thickness.

3. A method according to claim 1, **characterized in that** the score is made in the form of a discontinuous slot (20) which surrounds the inner portion (16) of the support (18) and which is interrupted by bridges (22, 24, 26) made integral with the support (12).

4. A method according to claim 3, **characterized in that** said bridges (22, 24, 26) each include at least one fracture initiation score (28) which is formed directly during the moulding of the support (12).

5. A method according to any one of claims 3 or 4, **characterized in that** said mini card includes on at least one of its edges defined by the slot, a chamfer (32) which is formed directly during the moulding of the support (12).

6. A method according to any one of the preceding claims, **characterized in that** said support is moulded by the injection of plastic material.

7. A method according to claim 6 combined with any one of claims 3 to 5, **characterized in that** at least one (26) of the bridges has an important width and **in that** the injection is performed close to said bridge (26).

8. A method according to claim 7, **characterized in that** the injection is performed on one edge (34) of the card support (12), the main injection direction being substantially contained within the support (12) plan and oriented towards said bridge (26) having the important width.

9. A method according to any one of the preceding claims, **characterized in that** said electronic microcircuit belongs to a module which is added in a cavity arranged in the card support (12) and **in that** the cavity is formed directly during the moulding of the support (12).

## Patentansprüche

1. Verfahren für die Herstellung einer integrierten Schaltungskarte mit Kontakt von der Art, bei der die Karte einen Träger (12) umfaßt, der durch Gießen aus Kunststoff ausgeführt wird, der die Form einer Platte mit einem ersten Format hat, und der mindestens eine elektronische Mikroschaltung und eine Reihe Kontaktbereiche (14) für den elektrischen Anschluß der Mikroschaltung an eine Betriebsschaltung trägt, und von der Art, bei der die Karte eine Vorstanzung der Kontur (20) umfaßt, die im Träger (12) um einen inneren Abschnitt (16) herum gebildet ist, der die Mikroschaltung und die Reihe der Kontaktbereiche (14) umfaßt, damit im Innern eines äußeren Abschnitts (18) im ersten Format eine Minikarte in einem zweiten Format abgegrenzt wird, wobei die Minikarte so mit dem äußeren Abschnitt (18) des Trägers (12) verbunden ist, daß sie entlang der Vorstanzung leicht davon abgetrennt werden kann,
**dadurch gekennzeichnet, daß** die Vorstanzung (20) direkt beim Gießen des Trägers (12) und des inneren Abschnitts (16) in einem gleichen Gießraum gebildet wird.

2. Verfahren nach Anspruch 1, **dadurch gekennzeichnet, daß** die Vorstanzung in Form einer Rille ausgeführt wird, die den inneren Abschnitt des Trägers umgibt, und an der der Träger eine verringerte Dicke aufweist.

3. Verfahren nach Anspruch 1, **dadurch gekennzeichnet, daß** die Vorstanzung in Form eines unterbrochenen Schlitzes (20) ausgeführt wird, der den inneren Abschnitt (16) des Trägers (18) umgibt, und der durch Übergänge (22, 24, 26) unterbrochen wird, die durch Materialfluß mit dem Träger (12) ausgeführt werden.

4. Verfahren nach Anspruch 3, **dadurch gekennzeichnet, daß** die Übergänge (22, 24, 26) jeweils mindestens einen Anriß (28) umfassen, der direkt beim Gießen des Trägers (12) gebildet wird.

5. Verfahren nach einem beliebigen der vorstehenden Ansprüche 3 oder 4, **dadurch gekennzeichnet, daß** die Minikarte auf mindestens einer (30) ihrer durch den Schlitz abgegrenzten Kanten eine Fase (32) umfaßt, die direkt beim Gießen des Trägers (12) gebildet wird.

6. Verfahren nach einem beliebigen der vorstehenden Ansprüche, **dadurch gekennzeichnet, daß** der Träger durch Einspritzen von Kunststoff geformt wird.

7. Verfahren nach,Anspruch 6 in Kombination mit einem beliebigen der vorstehenden Ansprüche 3 bis 5, **dadurch gekennzeichnet, daß** mindestens einer (26) der Übergänge eine große Breite aufweist, und dadurch**,** daß die Einspritzung in der Nähe des besagten Übergangs (26) ausgeführt wird.

8. Verfahren nach Anspruch 7, **dadurch gekennzeichnet, daß** die Einspritzung an einer Kante (34) des Trägers (12) der Karte ausgeführt wird, wobei die Hauptrichtung der Einspritzung deutlich in der Ebene des Trägers (12) enthalten und zum besagten sehr breiten Übergang (26) gerichtet ist.

9. Verfahren nach einem beliebigen der vorstehenden Ansprüche, **dadurch gekennzeichnet, daß** die elektronische Mikroschaltung Teil eines Moduls ist, das in einer im Träger (12) der Karte gestalteten Austiefung angesetzt ist, und daß die Austiefung direkt beim Gießen des Trägers (12) geformt wird.
